# FASCICULE DE BREVET EUROPEEN

(11) **EP 1 826 702 B1**
(45) Date de publication et mention de la délivrance du brevet: **08.10.2008**
(21) Numéro de dépôt: 07102585.2
(22) Date de dépôt: 16.02.2007
(51) Int. Cl.: G06F 21/06

(54) **Dispositif anti-intrusion**
Einbruchhemmende Vorrichtung
Anti-intrusion device

(30) Priorité: 22.02.2006 FR 0650617
(43) Date de publication de la demande: 29.08.2007
(73) Titulaire: SAGEM MONETEL, 75015 Paris (FR)
(72) Inventeur: Dubois, Eric, 75015 Paris (FR)
(74) Mandataire: de Beaumont, Michel

(56) Documents cités:
- FR-A- 2 815 733
- FR-A- 2 860 643
- US-A1- 2003 047 433

## Description

### Domaine de l'invention

La présente invention concerne un dispositif anti-intrusion destiné à protéger des objets, par exemple des circuits électroniques, contenus dans un boîtier de façon à éviter que l'on ait accès auxdits objets ou à des informations contenues dans lesdits objets.

### Exposé de l'art antérieur

Les systèmes de lecture et/ou d'écriture de données sur des cartes à puce ou des cartes magnétiques, par exemple les systèmes utilisés pour réaliser des opérations de paiement, comprennent généralement des dispositifs anti-intrusion.

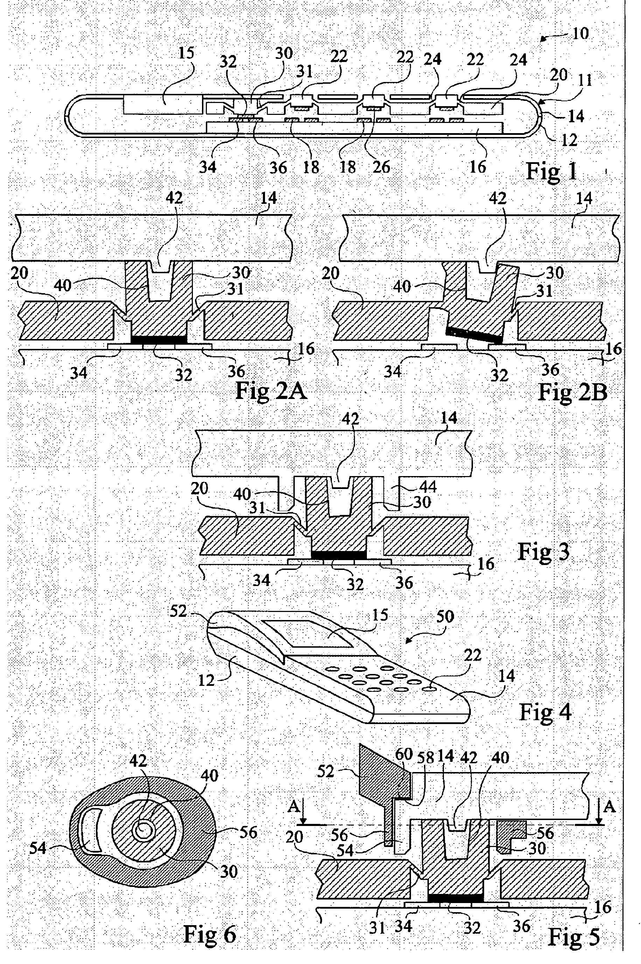

La figure 1 est une coupe schématique d'un système de lecture/écriture de cartes à puce. Le dispositif 10 comprend un boîtier 11 constitué d'une portion inférieure de boîtier 12 et d'une portion supérieure de boîtier 14. Un écran d'affichage 15 est fixé à la portion supérieure de boîtier 14. Le dispositif 10 comprend un circuit imprimé 16 sur lequel sont réalisées des pistes conductrices 18. Par la suite, on appelle face inférieure de la portion supérieure de boîtier 14, la face de la portion supérieure de boîtier 14 du côté du circuit imprimé 16. Les pistes métalliques 18 sont reliées à des composants électroniques, non représentés. En outre, les moyens de lecture et d'écriture de données sur une carte à puce ne sont pas représentés. Le dispositif 10 comprend une membrane souple 20, par exemple en silicone ou en polyuréthane, au niveau de laquelle sont formées des touches 22 d'un clavier, chaque touche 22 correspondant à une portion de la membrane reliée au reste de la membrane par une lèvre 24 périphérique. Chaque touche 22 comprend, du côté du circuit imprimé 16, une portion conductrice 26 par exemple une région métallique. Sous chaque touche 22 sont disposées en vis-à-vis deux extrémités appartenant chacune à une piste métallique 18.

En l'absence d'action extérieure sur le clavier, chaque touche 22 est éloignée du plan médian de la membrane 20 et se trouve à distance des pistes conductrices 18. Lorsqu'un utilisateur exerce une pression sur une touche 22, la lèvre 24 associée permet un déplacement de la touche 22 jusqu'à ce que la portion conductrice 26 entre en contact avec les extrémités des pistes métalliques 18 sous-jacentes, établissant alors un contact électrique entre les deux pistes métalliques 18.

Le système de lecture/écriture 10 comprend un dispositif anti-intrusion constitué d'une touche factice 30 prévue au niveau de la membrane 20 et qui n'est pas visible depuis l'extérieur du boîtier 11. La touche factice 30 est, de façon analogue aux touches 22, reliée au reste de la membrane 20 par une lèvre périphérique 31 et comprend une portion conductrice 32 du côté de sa face inférieure. Les extrémités de deux pistes métalliques 34, 36 du circuit imprimé 16 sont disposées en vis-à-vis sous la touche factice 30. Les deux pistes 34, 36 forment deux portions d'une ligne de sécurité reliée à un circuit de traitement, non représenté. Le circuit de traitement est adapté à déterminer si les deux pistes métalliques 34, 36 sont connectées électriquement, par exemple en mesurant la résistance aux bornes de la ligne de sécurité. Un tel dispositif anti-intrusion est décrit dans le brevet WO 02/33717 au nom de Ascom Monetel et est, par exemple, prévu sur des lecteurs de carte à puce commercialisés par la société Sagem Monetel sous l'appellation EFT 930 et EFT 30.

FR-A-2860643 divulgue un dispositif anti-intrusion permettant de détecter une tentative d'ouverture du boitier. Ce dispositif comprend un ressort agencé de manière à être sous pression et à agir électriquement sur un circuit électronique via une surface conductrice lorsque le boitier est fermé, et à ne plus agir sur ce circuit lorsque le boitier est ouvert.

Lorsque la portion supérieure de boîtier 14 est fixée à la portion inférieure de boîtier 12, la touche factice 30 est sollicitée en permanence par la portion supérieure de boîtier 14 de façon à venir en appui contre le circuit imprimé 16. Dans ce cas, la portion conductrice 32 de la touche factice 30 vient en contact avec les extrémités des deux pistes 34, 36. La connexion électrique entre les deux pistes métalliques 34, 36 est détectée par le circuit de traitement.

Lorsqu'un individu tente d'accéder au contenu du boîtier 11 en retirant la portion supérieure de boîtier 14, la touche factice 30 n'est plus sollicitée par la portion supérieure de boîtier 14 et est ramenée par l'action de la lèvre 31 vers une position de repos à laquelle la portion conductrice 32 n'est plus en contact avec les pistes métalliques 34, 36. Le circuit de traitement est adapté à détecter une modification de la résistance de la ligne de sécurité, indiquant qu'une tentative d'ouverture du dispositif 10 a lieu.

Un inconvénient d'un tel dispositif anti-intrusion est qu'il n'est pas adapté à une portion supérieure de capot constituée de plusieurs morceaux.

Un autre inconvénient d'un tel dispositif anti-intrusion est qu'il ne permet pas de détecter une tentative d'ouverture du boîtier 11 qui consisterait à faire glisser la portion supérieure de boîtier 14 par rapport à la portion inférieure de boîtier 12 sans écarter les deux portions 12, 14 l'une de l'autre selon une direction perpendiculaire aux deux portions de boîtier 12, 14. Un tel déplacement de la portion supérieure de boîtier 14 est appelé par la suite déplacement latéral. En effet, un tel mouvement de glissement de la portion supérieure de boîtier 14 n'entraîne pas de déplacement de la touche factice 30 qui est toujours maintenue en appui contre le circuit imprimé 16. Il n'y a donc pas interruption de la connexion électrique entre les pistes métalliques 34, 36. Un accès au contenu du système de lecture/écriture 10 est alors possible sans qu'une tentative d'intrusion ne soit détectée.

### Résumé de l'invention

La présente invention vise un dispositif anti-intrusion destiné à protéger des objets contenus dans un boîtier constitué de première et seconde portions de boîtier contre une tentative d'intrusion consistant en un déplacement latéral de la première portion de boîtier par rapport à la seconde portion de boîtier.

Un autre objet de l'invention est de prévoir un dispositif anti-intrusion qui modifie peu la structure d'un dispositif anti-intrusion classique.

Pour atteindre ces objets, la présente invention prévoit un dispositif anti-intrusion d'un boîtier, le boîtier comportant une première portion de boîtier fixée à une deuxième portion de boîtier dans une position d'utilisation normale, le boîtier contenant au moins un élément mobile comportant une région conductrice reliant électriquement deux pistes conductrices dans la position d'utilisation normale, la première portion de boîtier comprenant un élément d'appui adapté à faire pivoter l'élément mobile lorsque la première portion de boîtier est déplacée latéralement par rapport à la deuxième portion de boîtier, d'où il résulte une interruption de la liaison électrique entre les deux pistes conductrices.

Selon un exemple de réalisation de l'invention, le boîtier contient une membrane d'un matériau souple fixe par rapport au boîtier, l'élément mobile comportant une portion de la membrane reliée au reste de la membrane par une lèvre déformable.

Selon un exemple de réalisation de l'invention, l'élément mobile comprend un évidement et l'élément d'appui comprend un pion se projetant à partir de la première portion de boîtier et situé au moins en partie dans l'évidement.

Selon un exemple de réalisation de l'invention, l'élément d'appui comprend une collerette se projetant à partir de la première portion de boîtier et entourant l'élément mobile.

Selon un exemple de réalisation de l'invention, le boîtier comprend une troisième portion de boîtier fixée à la deuxième portion de boîtier ou à la première portion de boîtier et ayant au moins un bord adjacent à la première portion de boîtier dans la position d'utilisation normale. La troisième portion de boîtier comprend un élément d'appui supplémentaire adapté à faire pivoter l'élément mobile lorsque la troisième portion de boîtier est déplacée latéralement par rapport à la deuxième portion de boîtier, d'où il résulte une interruption de la liaison électrique entre les deux pistes conductrices.

Selon un exemple de réalisation de l'invention, l'élément d'appui supplémentaire comprend une partie annulaire entourant l'élément mobile.

Selon un exemple de réalisation de l'invention, l'élément d'appui comprend une protubérance se projetant à partir de la première portion de boîtier et s'étendant au moins en partie entre l'élément mobile et la partie annulaire.

Selon un exemple de réalisation de l'invention, le dispositif comprend des moyens adaptés à éloigner l'élément mobile des pistes conductrices lorsque la première portion de boîtier est écartée de la deuxième portion de boîtier.

Selon un exemple de réalisation de l'invention, l'élément d'appui supplémentaire s'étend au moins en partie entre la première portion de boîtier et la deuxième portion de boîtier d'où il résulte que la troisième portion de boîtier entraîne en déplacement la première portion de boîtier lorsque la troisième portion de boîtier est écartée de la deuxième portion de boîtier.

Selon un exemple de réalisation de l'invention, la première portion de boîtier comprend une surface d'appui adaptée à coopérer avec la troisième portion de boîtier d'où il résulte que la première portion de boîtier entraîne en déplacement la troisième portion de boîtier lorsque la première portion de boîtier est écartée de la deuxième portion de boîtier.

### Brève description des dessins

Ces objets, caractéristiques et avantages, ainsi que d'autres de la présente invention seront exposés en détail dans la description suivante d'exemples de réalisation particuliers faite à titre non-limitatif en relation avec les figures jointes parmi lesquelles :
la figure 1, précédemment décrite, est une coupe schématique d'un système de lecture/écriture comportant un dispositif anti-intrusion classique ;
les figures 2A et 2B représentent un premier exemple de réalisation d'un dispositif anti-intrusion selon l'invention, respectivement en l'absence de tentative d'intrusion et lors d'une tentative d'intrusion ;
la figure 3 représente un deuxième exemple de réalisation du dispositif anti-intrusion selon l'invention ;
la figure 4 représente schématiquement un exemple particulier de système de lecture/écriture ;
la figure 5 représente un troisième exemple de réalisation du dispositif anti-intrusion selon l'invention adapté au système de lecture/écriture de la figure 4 ; et
la figure 6 est une coupe du troisième exemple de réalisation du dispositif anti-intrusion de la figure 5 selon la ligne A-A.

### Description détaillée

Par souci de clarté, de mêmes éléments ont été désignés par de mêmes références aux différentes figures.

La présente invention consiste à prévoir, au niveau de la portion supérieure de boîtier venant en appui contre la touche factice, un élément formant butée susceptible de venir en contact avec une paroi latérale de la touche factice lors d'un déplacement latéral de la portion supérieure de boîtier. De ce fait, un déplacement latéral de la portion supérieure de boîtier entraîne un pivotement de la touche factice par rapport à un axe perpendiculaire à la direction de déplacement de la portion supérieure de boîtier et perpendiculaire à l'axe de la touche factice de sorte que la connexion électrique entre les deux pistes conductrices, auxquelles la portion conductrice de la touche factice est reliée en l'absence de déplacement de la portion supérieure de boîtier, n'est plus assurée. On obtient ainsi une détection d'une tentative d'intrusion par déplacement latéral de la portion supérieure de boîtier.

La figure 2A est une coupe partielle et schématique d'un premier exemple de réalisation du dispositif anti-intrusion selon l'invention. Les éléments communs au système de lecture/écriture 10 représenté en figure 1 conservent les mêmes références. Seuls les éléments utiles à la compréhension de l'invention sont représentés. Selon le premier exemple de réalisation, par rapport au système de lecture/écriture 10 représenté en figure 1, la touche factice 30 comprend un évidement central 40 et la portion supérieure de boîtier 14 comprend, du côté de sa face inférieure, un pion 42 qui pénètre dans l'évidement central 40. En figure 2A, la position de la portion supérieure de boîtier 14 correspond à une utilisation normale du système de lecture/écriture.

De façon analogue à ce qui a été décrit précédemment, lorsque la portion supérieure de boîtier 14 est éloignée du circuit imprimé 16, la touche factice 30 n'est plus maintenue en appui contre le circuit imprimé 16 de sorte que, sous l'action de la lèvre 31, la touche factice 30 s'éloigne du plan médian de la membrane 20, interrompant la connexion électrique entre les pistes métalliques 34, 36.

En outre, lorsque la portion supérieure de boîtier 14 n'est pas éloignée du circuit imprimé 16 mais simplement déplacée latéralement par rapport à celui-ci, le pion 42 vient en butée contre la paroi interne de l'évidement 40 entraînant un pivotement global de la touche factice 30 ce qui vient interrompre la connexion électrique entre les pistes métalliques 34, 36.

La figure 2B représente schématiquement la position résultante de la touche factice 30 lors d'un déplacement latéral de la portion supérieure de boîtier 14. Le matériau constituant la membrane 20, par exemple en silicone ou en polyuréthane, et les dimensions de la touche factice 30 sont choisis de sorte que la touche factice 30 ait une rigidité suffisante afin que, lors du déplacement de la portion supérieure de boîtier 14, la touche factice 30 subit un pivotement global plutôt qu'une déformation. A cette fin, la touche factice 30 peut correspondre à une portion cylindrique dont le diamètre extérieur est de l'ordre de 3 mm et l'évidement 40 peut avoir une forme cylindrique dont le diamètre est de l'ordre de 1,5 mm.

La figure 3 est une coupe analogue à la coupe de la figure 2 représentant un deuxième exemple de réalisation du dispositif anti-intrusion selon l'invention dans lequel, par rapport au premier exemple de réalisation, la portion supérieure de boîtier 14 comprend en outre, du côté de sa face inférieure, une collerette 44 qui, lorsque la portion supérieure de boîtier 14 est à une position normale par rapport au circuit imprimé 16, entoure la touche factice 30. De ce fait, lors d'un déplacement latéral de la portion supérieure de boîtier 14 par rapport au circuit imprimé 16, le pion 42 et la collerette 44 exercent une poussée sur la touche factice 30 entraînant un pivotement global de celle-ci, ce qui interrompt la connexion électrique entre les pistes métalliques 34, 36. Le deuxième exemple de réalisation présente l'avantage d'assurer un meilleur contrôle de la déformation de la touche factice 30 lors d'un déplacement latéral de la portion supérieure de boîtier 14. On évite ainsi une situation selon laquelle la touche factice 30 se déformerait de façon telle que la connexion électrique entre les pistes métalliques 34, 36 ne serait pas interrompue même en cas de déplacement latéral de la portion supérieure de boîtier 14.

Les premier et deuxième exemples de réalisation présentent en outre l'avantage de permettre un centrage de la portion supérieure de boîtier 14 par rapport à la touche factice 30 lors de la fixation de la portion supérieure de boîtier 14 à la portion inférieure de boîtier 12. Plusieurs touches factices 30 selon les premier et deuxième exemples de réalisation peuvent être prévues au niveau de la membrane 10.

Selon une variante des premier et deuxième exemples de réalisation, on peut prévoir, à la place du pion 42 et de la collerette 44, un évidement au niveau de la portion supérieure de boîtier 14 dans lequel pénètre la touche factice 30, la forme de l'évidement correspondant sensiblement à la forme de la touche factice 30. Le fond de l'évidement vient alors en appui contre la touche factice 30 pour la maintenir contre le circuit imprimé 16 de sorte qu'une connexion électrique entre les pistes métalliques 34, 36 est assurée lorsque la portion supérieure de boîtier 14 est dans une position normale d'utilisation par rapport à la portion inférieure de boîtier 12. La paroi latérale de l'évidement joue alors le rôle d'élément de butée qui, lors d'un déplacement latéral de la portion supérieure de boîtier 14 par rapport à la portion inférieure de boîtier 12, exerce une poussée contre la touche factice 30 entraînant le pivotement de cette dernière.

Dans les exemples de réalisation qui précèdent, la touche factice 30 assure à la fois une fonction anti-intrusion lors d'un écartement de la portion supérieure de boîtier 14 par rapport à la portion inférieure de boîtier 12 et une fonction anti-intrusion lors d'un déplacement latéral de la portion supérieure de boîtier 14 par rapport à la portion inférieure de boîtier 12. Il est clair que les deux fonctions anti-intrusion peuvent être réalisées de façon séparée. Dans un tel cas, la touche factice du dispositif anti-intrusion lors d'un déplacement latéral de la portion supérieure de boîtier 14 peut rester immobile par rapport au reste de la membrane 20 lorsque la portion supérieure de boîtier 14 est éloignée de la portion inférieure de boîtier 12 et ne changer de position que lors d'un déplacement latéral de la portion supérieure de boîtier 14 par rapport à la portion inférieure de boîtier 12. Toutefois, pour réduire l'encombrement des dispositifs anti-intrusion, il est avantageux de réaliser les deux fonctions anti-intrusion au niveau d'une même touche factice.

La figure 4 est une vue en perspective et schématique d'un système de lecture/écriture 50 qui, comme pour le système de lecture/écriture représenté en figure 1, comprend une portion supérieure de boîtier 14, une portion inférieure de boîtier 12, des touches 22 d'un clavier et un écran d'affichage 15. Toutefois, à la différence du système de lecture/écriture de la figure 1, le système 50 comprend un plastron 52 fixé à la portion supérieure de boîtier 14 et entourant l'écran 15. Le plastron 52 a une fonction essentiellement esthétique puisqu'il peut avoir une couleur différente de la couleur de la portion supérieure de boîtier 14, une telle couleur étant par exemple choisie par l'acquéreur du système de lecture/écriture.

Les figures 5 et 6 représentent un troisième exemple de réalisation du dispositif anti-intrusion selon l'invention. Un tel dispositif permet de détecter à la fois un déplacement latéral de la portion supérieure de boîtier 14 par rapport à la portion inférieure de boîtier 12 et un déplacement latéral du plastron 52 par rapport à la portion inférieure de boîtier 12. Selon le troisième exemple de réalisation, la touche factice 30 est disposée à proximité de la jonction entre la portion supérieure de boîtier 14 et le plastron 52. La portion supérieure de boîtier 14 comprend une protubérance 54 qui s'étend à partir de la face inférieure de la portion supérieure de boîtier 14 de façon adjacente à la touche factice 30 du côté du plastron 52. La protubérance 54 forme une portion de collerette. Le plastron 52 se prolonge par une extension 56 en forme d'anneau qui entoure la touche factice 30 et la portion de collerette 54. L'anneau 56 s'étend donc partiellement entre la portion supérieure de boîtier 14 et le circuit imprimé 16.

Le troisième exemple de réalisation permet donc la détection d'une tentative d'intrusion qui consiste à déplacer latéralement la portion supérieure de boîtier 14 ou le plastron 52. En effet, un déplacement latéral de la portion supérieure de boîtier 14 entraîne la mise en appui du pion 42 (et éventuellement de la portion de collerette 54) contre la touche factice 30 qui vient alors en appui contre l'anneau 56. Un déplacement latéral de la portion supérieure de boîtier 14 entraîne donc un déplacement latéral du plastron 52, le mouvement global du plastron 52 et de la portion supérieure de boîtier 14 entraînant le pivotement de la touche factice 30 comme cela a été décrit précédemment en relation au deuxième exemple de réalisation. De façon analogue, un déplacement latéral du plastron 52 entraîne la mise en appui de l'anneau 56 contre la touche factice 30 qui vient à son tour appuyer contre le pion 42. Un déplacement latéral du plastron 52 entraîne donc un déplacement latéral de la portion supérieure de boîtier 14, le mouvement global du plastron 52 et de la portion supérieure de boîtier 14 entraînant le pivotement de la touche factice 30 comme cela a été décrit précédemment en relation au deuxième exemple de réalisation.

La portion supérieure de boîtier 14 comprend une surface en escaliers 58 adaptée à coopérer avec une surface 60 de forme complémentaire prévue au niveau du plastron 52. La portion de collerette 54 est située entre la surface 60 du plastron 52 et le circuit imprimé 16. Avec un tel agencement, lorsque le plastron 52 est écarté de la portion inférieure de boîtier 12, l'anneau 56 vient en appui contre la face inférieure de la portion supérieure de boîtier 14, entraînant le déplacement de la portion supérieure de boîtier 14. De même, lorsque la portion supérieure de boîtier 14 est écartée de la portion inférieure de boîtier 12, la surface 58 vient en appui contre la surface 60 entraînant le déplacement du plastron 52. La touche factice 30 selon le troisième exemple de réalisation sert donc également de dispositif anti-intrusion lors d'un écartement de la portion supérieure de boîtier 14 ou du plastron 52 par rapport à la portion inférieure de boîtier 12.

Bien entendu, la présente invention est susceptible de diverses variantes et modifications qui apparaîtront à l'homme de l'art. En particulier, bien que les exemples de réalisation précédemment décrits concernent un système de lecture/écriture de cartes à puce, la présente application peut s'appliquer à tout type de système comprenant une surface critique fixée à une surface de référence et pour lequel on souhaite détecter un déplacement latéral de la surface critique par rapport à la surface de référence.

## Revendications

1. Dispositif anti-intrusion d'un boîtier (11), le boîtier comportant une première portion de boîtier (14) fixée à une deuxième portion de boîtier (12) dans une position d'utilisation normale, le boîtier contenant au moins un élément mobile (30) comportant une région conductrice (32) reliant électriquement deux pistes conductrices (34, 36) d'un circuit imprimé (16) se situant du côté de la deuxième portion du boîtier (12) dans la position d'utilisation normale, **caractérisé en ce que** :
la première portion de boîtier comprenant un élément d'appui (42, 44) adapté à faire pivoter l'élément mobile lorsque la première portion de boîtier est déplacée latéralement par rapport à la deuxième portion de boîtier, d'où il résulte une interruption de la liaison électrique entre les deux pistes conductrices indiquant qu'une tentative d'ouverture du boîtier (11) a eu lieu; et l'élément mobile (30) et la première portion de boîtier (14) étant chacun réalisés en une seule pièce.

2. Dispositif selon la revendication 1, dans lequel le boîtier (11) contient une membrane (20) d'un matériau souple fixe par rapport au boîtier, l'élément mobile (30) comportant une portion de la membrane reliée au reste de la membrane par une lèvre (31) déformable.

3. Dispositif selon la revendication 1, dans lequel l'élément mobile (30) comprend un évidement (40) et dans lequel l'élément d'appui comprend un pion (42) se projetant à partir de la première portion de boîtier (14) et situé au moins en partie dans l'évidement.

4. Dispositif selon la revendication 1, dans lequel l'élément d'appui comprend une collerette (44) se projetant à partir de la première portion de boîtier (14) et entourant l'élément mobile (30).

5. Dispositif selon la revendication 1, dans lequel le boîtier (11) comprend une troisième portion de boîtier (52) fixée à la deuxième portion de boîtier (12) ou à la première portion de boîtier (14) et ayant au moins un bord adjacent à la première portion de boîtier dans la position d'utilisation normale et dans lequel la troisième portion de boîtier comprend un élément d'appui supplémentaire (56) adapté à faire pivoter l'élément mobile (30) lorsque la troisième portion de boîtier est déplacée latéralement par rapport à la deuxième portion de boîtier, d'où il résulte une interruption de la liaison électrique entre les deux pistes conductrices (34, 36).

6. Dispositif selon la revendication 5, dans lequel l'élément d'appui supplémentaire comprend une partie annulaire (56) entourant l'élément mobile (30).

7. Dispositif selon la revendication 6, dans lequel l'élément d'appui comprend une protubérance (54) se projetant à partir de la première portion de boîtier (14) et s'étendant au moins en partie entre l'élément mobile (30) et la partie annulaire (56).

8. Dispositif selon la revendication 1, comprenant des moyens (31) adaptés à éloigner l'élément mobile (30) des pistes conductrices (34, 36) lorsque la première portion de boîtier (14) est écartée de la deuxième portion de boîtier (12).

9. Dispositif selon les revendications 5 et 8, dans lequel l'élément d'appui supplémentaire (56) s'étend au moins en partie entre la première portion de boîtier (14) et la deuxième portion de boîtier (12) d'où il résulte que la troisième portion de boîtier (52) entraîne en déplacement la première portion de boîtier (14) lorsque la troisième portion de boîtier est écartée de la deuxième portion de boîtier (12).

10. Dispositif selon les revendications 5 et 8, dans lequel la première portion de boîtier (14) comprend une surface d'appui (58) adaptée à coopérer avec la troisième portion de boîtier (52) d'où il résulte que la première portion de boîtier entraîne en déplacement la troisième portion de boîtier lorsque la première portion de boîtier est écartée de la deuxième portion de boîtier (12).

## Claims

1. Anti-intrusion device for a housing (11), the housing comprising a first housing portion (14) fixed to a second housing portion (12) in a position of normal use, the housing containing at least one moveable element (30) comprising a conductive region (32) electrically connecting two conductive tracks (34, 36) of a printed circuit (16) positioned close to the second housing portion (12) in the position of normal use, **characterized in that**:
the first housing portion comprises a pushing element (42, 44) adapted to swivel the moveable element when the first housing portion is moved laterally with respect to the second housing portion, resulting in a break in the electrical connection between the two conductive tracks indicating that an attempt to open the housing (11) has taken place; and
the moveable element (30) and the first housing portion (14) each being formed by a single piece.

2. Device according to claim 1, wherein the housing (11) contains a membrane (20) of a flexible material fixed with respect to the housing, the moveable element (30) comprising a portion of the membrane linked to the rest of membrane by a deformable lip (31).

3. Device according to claim 1, wherein the moveable element (30) comprises a cavity (40) and wherein the pushing element comprises a piece (42) projecting from the first housing portion (14) and positioned at least partially within the cavity.

4. Device according to claim 1, wherein the pushing element comprises a flange (44) projecting from the first housing portion (14) and surrounding the moveable element (30).

5. Device according to claim 1, wherein the housing (11) comprises a third housing portion (52) fixed to the second housing portion (12) or to the first housing portion (14) and having at least one edge adjacent to the first housing portion in the position of normal use and wherein the third housing portion comprises an additional pushing element (56) adapted to swivel the moveable element (30) when the third housing portion is moved laterally with respect to the second housing portion, resulting in a break of the electrical connection between the two conducting tracks (34, 36).

6. Device according to claim 5, wherein the additional pushing element comprises an annular part (56) surrounding the moveable element (30).

7. Device according to claim 6, wherein the pushing element comprises a protrusion (54) projecting from the first housing element (14) and extending at least partially between the moveable element (30) and the annular part (56).

8. Device according to claim 1, comprising means (31) adapted to move the moveable element (30) away from the conductive tracks (34, 36) when the first housing portion (14) is separated from the second housing portion (12).

9. Device according to claims 5 and 8, wherein the additional pushing element (56) extends at least partially between the first housing portion (14) and the second housing portion (12) resulting in the third housing portion (52) causing the first housing portion (14) to be moved when the third housing portion is separated from the second housing portion (12).

10. Device according to claims 5 and 8, wherein the first housing portion (14) comprises a contact surface (58) adapted to engage with the third housing portion (52) resulting in the first housing portion causing movement of the third housing portion when the first housing portion is separated from the second housing portion (12).

## Patentansprüche

1. Eine Anti-Eindringeinrichtung für ein Gehäuse (11), wobei das Gehäuse einen ersten Gehäuseteil (14) aufweist, der an einem zweiten Gehäuseteil (12) in einer Position von normaler Nutzung fixiert ist, wobei das Gehäuse wenigstens ein bewegliches Element (30) enthält, das eine leitende Region (32) aufweist, die elektrisch zwei leitende Spuren (34, 36) von einer gedruckten Schaltung (16) verbindet, positioniert nahe dem zweiten Gehäuseteil (12) in der Position von normaler Nutzung, **dadurch gekennzeichnet dass**:
der erste Gehäuseteil ein Drück- bzw. Antriebselement (42, 44) aufweist, das angepasst ist zum Drehen bzw. Schwenken des beweglichen Elements, wenn der erste Gehäuseteil seitlich mit Bezug auf den zweiten Gehäuseteil bewegt wird, was zu einem Bruch in der elektrischen Verbindung zwischen den zwei leitenden Spuren führt, anzeigend, dass ein Versuch zum Öffnen des Gehäuses (11) stattgefunden hat; und
das bewegliche Element (30) und der erste Gehäuseteil (14) jeweils durch ein einzelnes Stück gebildet sind.

2. Einrichtung gemäß Anspruch 1, wobei das Gehäuse (11) eine Membran (20) aus flexiblem Material enthält, die mit Bezug auf das Gehäuse fixiert ist, wobei das bewegliche Element (30) einen Teil von der Membran verbunden mit dem Rest von der Membran durch eine verformbare Lippe (31) aufweist.

3. Einrichtung gemäß Anspruch 1, wobei das bewegliche Element (30) eine Höhlung (40) aufweist, und wobei das Drückelement ein Stück (42) aufweist, das sich von dem ersten Gehäuseteil (14) erstreckt und wenigstens teilweise innerhalb der Höhlung positioniert ist.

4. Einrichtung gemäß Anspruch 1, wobei das Drückelement einen Flansch bzw. eine Kante (44) aufweist, die von dem ersten Gehäuseteil (14) hervorsteht und das bewegliche Element (30) umgibt.

5. Einrichtung gemäß Anspruch 1, wobei das Gehäuse (11) einen dritten Gehäuseteil (52) aufweist, der an dem zweiten Gehäuseteil (12) oder an dem ersten Gehäuseteil (14) fixiert ist und wenigstens einen Rand besitzt der benachbart ist zu dem ersten Gehäuseteil in der Position von normaler Nutzung und wobei der dritte Gehäuseteil ein zusätzliches Drück- bzw. Antriebselement (56) aufweist, das angepasst ist, um das bewegliche Element (30) zu drehen bzw. zu schwenken, wenn der dritte Gehäuseteil seitlich mit Bezug auf den zweiten Gehäuseteil bewegt wird, was zu einem Bruch von der elektrischen Verbindung zwischen den zwei leitenden Spuren (34, 36) führt.

6. Einrichtung gemäß Anspruch 5, wobei das zusätzliche Drückelement einen kranzförmigen Teil (56) aufweist, der das bewegliche Element (30) umgibt.

7. Einrichtung gemäß Anspruch 6, wobei das Drückelement einen Vorsprung (54) aufweist, der von dem ersten Gehäuseelement (14) hervorsteht und sich wenigstens teilweise zwischen dem beweglichen Element (30) und dem kranzförmigen Teil (56) erstreckt.

8. Einrichtung gemäß Anspruch 1, die Mittel (31) aufweist, die angepasst sind zum Bewegen des beweglichen Elements (30) weg von den leitenden Spuren (34, 36), wenn der erste Gehäuseteil (14) von dem zweiten Gehäuseteil (12) separiert wird.

9. Einrichtung gemäß den Ansprüchen 5 und 8, wobei das zusätzliche Drückelement (56) sich wenigstens teilweise zwischen dem ersten Gehäuseteil (14) und dem zweiten Gehäuseteil (12) erstreckt, was dazu führt das der dritte Gehäuseteil (52) bewirkt, dass der erste Gehäuseteil (14) bewegt wird, wenn der dritte Gehäuseteil von dem zweiten Gehäuseteil (12) separiert wird.

10. Einrichtung gemäß den Ansprüchen 5 und 8, wobei der erste Gehäuseteil (14) eine Kontaktoberfläche (58) aufweist, die angepasst ist zum Eingriff mit dem dritten Gehäuseteil (52), was dazu führt, dass der erste Gehäuseteil eine Bewegung von dem dritten Gehäuseteil bewirkt, wenn der erste Gehäuseteil von dem zweiten Gehäuseteil (12) separiert wird.
